# EUROPEAN PATENT APPLICATION

(11) **EP 3 907 436 A1**
(43) Date of publication of application: **10.11.2021**
(21) Application number: 20209752.3
(22) Date of filing: 25.11.2020
(51) Int. Cl.: F24F 8/10, F24F 8/80, F24F 8/95, F24F 13/20, B01D 46/00, B01D 46/42, F01N 13/00, F01N 13/08, F01N 13/18, A47L 9/24, F24F 13/02, F24F 13/14, B08B 15/00

(54) **TOXIC GAS PURIFICATION APPARATUS HAVING A LOCAL EXHAUST FUNCTION**

(30) Priority: 06.05.2020 KR 20200053557
(71) Applicant: SMARTKOREA Co., Ltd., Daejeon (KR)
(72) Inventor: JANG, Chae won, Daejeon (KR)
(74) Representative: Müller-Boré & Partner Patentanwälte PartG mbB

(57) **Abstract**

The present invention relates to a toxic gas purification apparatus having a local exhaust function. Here, the purification device is a device for collecting and purifying toxic or harmful gases in places such as a laboratory or a workplace that are easily exposed to various chemical substances. In addition, the purification device includes a local exhaust means for intensively inhaling harmful gas generated at a specific point of interest by the user. Accordingly, the purification device includes an additional function capable of intensively collecting and purifying harmful gases at specific points in addition to the original function of collecting and purifying harmful gases in a wide area.

The present invention provides an apparatus for purifying harmful gases comprising a suction unit 11 for collecting harmful gas is installed at the lower end of the main body 10, and a filtering unit 12 for filtering and purifying the harmful gas is installed above the suction unit 11, and a purified air discharge unit 13 for discharging the purified air to the outside is installed above the filtering part 12, wherein the wherein the apparatus for purifying harmful gases includes: a housing 20 coupled to an outer surface of a point of the main body 10 on which the suction unit 11 is formed, and communicating with the suction unit 11 inside the main body 10; a local exhaust line unit 30 comprising a suction pipe 31 that is coupled to one side of the housing 20 and is formed long enough so that the user can exhaust the harmful gas at a specific point, and a collection end 32 to allow the user to collect harmful gases at a specific point at the end of it.

## Description

### [Technical Field]

The following description relates to a toxic gas purification apparatus having a local exhaust function.

Specifically, the present invention relates to a toxic gas purification apparatus having a local exhaust function. Here, the purification device is a device for collecting and purifying toxic or harmful gases in places such as a laboratory or a workplace that are easily exposed to various chemical substances. In addition, the purification device includes a local exhaust means for intensively inhaling harmful gas generated at a specific point of interest by the user. Accordingly, the purification device includes an additional function capable of intensively collecting and purifying harmful gases at specific points in addition to the original function of collecting and purifying harmful gases in a wide area.

### [Related Art]

In general, harmful gas purification devices are used to remove harmful gases generated during processes and experiments in industrial (chemical, agricultural chemical, pharmaceutical companies, etc.) field with dry removal, H-ION Cluster, and anion module.

In laboratories or workshops that conduct specific experiments with various chemical substances or manufacture products, many kinds of chemical substances are retained and various experiments are conducted. For this reason, there is a high possibility that harmful substances are gasified and contaminated in the air. Even in small amounts, the experimenter may cause health problems if exposed to harmful substances.

In addition, gasified hazardous chemicals can act as a cause that can cause accidents such as fire or explosion, and can cause cross-contamination on various data analyzed. Furthermore, it is preferable that harmful factors gasified in the atmosphere of a laboratory or a workplace are discharged to the outside through a duct and purified, but may remain indoors and accumulate locally.

Most of these harmful substances include fine dust, carbon dioxide, formaldehyde, and volatile organic compounds, but many laboratories or workplaces that use strong acids such as nitric acid and sulfuric acid are exposed to more dangerous situations.

In this regard, the present applicant has applied for and registered a patent for the technical details of the indoor noxious gas purification device (Korean Registration Patent No. 10-1901847, dated 2018.09.28. hereinafter, Pre-registered invention).

The indoor harmful gas purification apparatus proposed in the pre-registered invention includes: a main body equipped with a movable wheel on the bottom of a hexahedral case; an external air suction unit formed under the body; An air purifying unit that purifies the air sucked through the external air intake unit through a multi-stage filter layer; a purified air discharge unit for drawing up the purified air from the external air suction unit through an upper air purifying unit and discharging it in the front, rear, left and right directions above the main body; and a touch screen unit that controls the air volume of the purified air discharge unit and monitors the indoor temperature and humidity, and the concentration of harmful gases in real time.

The indoor harmful gas purification apparatus of such a pre-registered invention performs a function of inhaling and purifying harmful gas in a wide area (a wide area in which the device is disposed) through a suction unit. However, it is difficult to deal with harmful gases that are fumed at a specific point, for example, at a point such as the upper part of an experiment or a work table or a specific location of a reagent chamber.

That is, purification of the harmful gas fumed at a specific point can be processed only after the harmful gas sinks to the lower side, which is a position where the purification device can inhale. In particular, in the case of harmful gas that needs to be treated quickly, since a separate purification device must be provided and treated, an economic burden is generated due to the provision of a separate device.

### [Detailed Description of the Invention]

### [Technical Problem to Be Solved]

The present invention is invented to solve the above problem.

Accordingly, an object of the present invention is to provide an apparatus for purifying a harmful gas having a local exhaust function. The present invention adds a local exhaust means that allows the user to intensively inhale the harmful gas generated at a specific point of interest to the conventional harmful gas purification device for collecting and purifying harmful gas in places such as a laboratory or a workplace. Accordingly, in addition to the original function of collecting and purifying harmful gases in a wide area, the purifying apparatus of the present invention can be used by adding an additional function to intensively collect and purify harmful gases at specific points.

### [Technical Solution of the Invention]

In order to achieve the above object, the present invention has the following configurations.

The present invention provides an apparatus for purifying harmful gases comprising a suction unit for collecting noxious gas is installed at a lower end of the body, a filtering unit for filtering and purifying harmful gas is installed above the suction unit, and a purified air discharge unit for discharging the purified air to the outside is installed above the filtering part, wherein the apparatus for purifying harmful gases includes a housing coupled to an outer surface of a point of the main body in which the suction unit is formed and communicating with the suction unit inside the main body; and a local exhaust line portion coupled to one side of the housing and having an elongated suction pipe to allow a user to exhaust harmful gas at a specific point, and having a collection end portion formed at the end portion to collect harmful gas at a specific point.

In addition, the local exhaust line portion is provided with a door assembly configured to generate a suction force and block the suction force for a specific point for local exhaust inside the end of the suction pipe in which the collecting end is formed.

In particular, the door assembly includes: a door formed in a shape and a width corresponding to an inner circumferential surface of the suction pipe and disposed inside the suction pipe; a hinge pin coupled through the suction pipe and the door so that the door is rotated inside the suction pipe to seal or open the inner peripheral surface of the suction pipe; and a knob coupled to or integrally formed with an end of the hinge pin protruding outward of the suction pipe so that the user can rotate the hinge pin.

On the other hand, when the inner peripheral surface of the suction pipe is sealed, a sealing cover made of synthetic resin or synthetic rubber is coupled to the outer peripheral surface of the door in order to improve sealing efficiency with the inner peripheral surface of the suction pipe.

In addition, the main body is formed in a polygonal cylindrical shape. The main body includes a cover assembly. The cover assembly is configured to improve the suction efficiency of the local exhaust line unit by sealing the suction unit on the other side of the body except the side on which the housing of the local exhaust line unit coupled to one side of the multi-angular cylindrical shape is installed. The cover assembly includes: a plurality of cover plates formed to be wider than the width of the suction unit formed in the main body, and provided in a number corresponding to the remaining side surfaces of the main body except for the side on which the housing of the local exhaust line unit is installed; a plurality of connecting members for integrating a cover plate connecting each end portion of each of the cover plates to seal the suction unit so that each cover plate has a different angle on a plane; and magnetic bodies that are coupled to each of the cover plates in a number of more than one so that the cover plates are attached to the surface of the main body by magnetic forces when each cover plate seals the multiple body suction units.

### [Effects of the Invention]

The present invention allows the treatment of harmful gases in a wide area with a single device and the treatment of harmful gases fumed at a specific point to be carried out in a mixture, so that harmful gases in a laboratory or workplace are processed more quickly and conveniently. It can be done, and the effect of eliminating the economic burden due to the provision of a separate purification device for treating harmful gas at a specific point is obtained.

In addition, the present invention makes it possible to selectively drive or mix the driving of the wide-area processing unit and the local exhaust processing unit of harmful gas, so that the optimal harmful gas treatment can be performed according to environmental conditions such as a laboratory or a workplace. The effect that the treatment can be carried out more efficiently is obtained.

### [Brief Description of the Drawings]

FIG. 1 is a front view of the harmful gas purification device according to the present invention,
FIG. 2 is a side view of the harmful gas purification apparatus according to the present invention.
FIG. 3 is an exemplary cross-sectional view of a harmful gas purification device according to the present invention.
FIG. 4 is an enlarged cross-sectional view of the door assembly of the toxic gas purification device according to the present invention.
FIG. 5 is a use state diagram of the door assembly of the harmful gas purification device according to the present invention.
FIG. 6a and 6b are a front view and a plan view of a further embodiment 1 of the present invention.
FIG. 7a and 7b are examples of the use state of the additional embodiment 1 of the present invention.
FIG. 8 is a front view of a further embodiment 2 of the present invention.
FIG. 9 is a front view of the housing of the further embodiment 2 of the present invention.
FIG. 10 is a plan view of the housing of the further embodiment 2 of the present invention.
FIGS. 11 is a side view of the housing of the further embodiment 2 of the present invention.
FIGS. 12 is a plan view of a door assembly of a further embodiment 3 of the present invention.

### [Detailed Description of the Invention]

Hereinafter, the present invention will be described below with reference to the accompanying drawings.

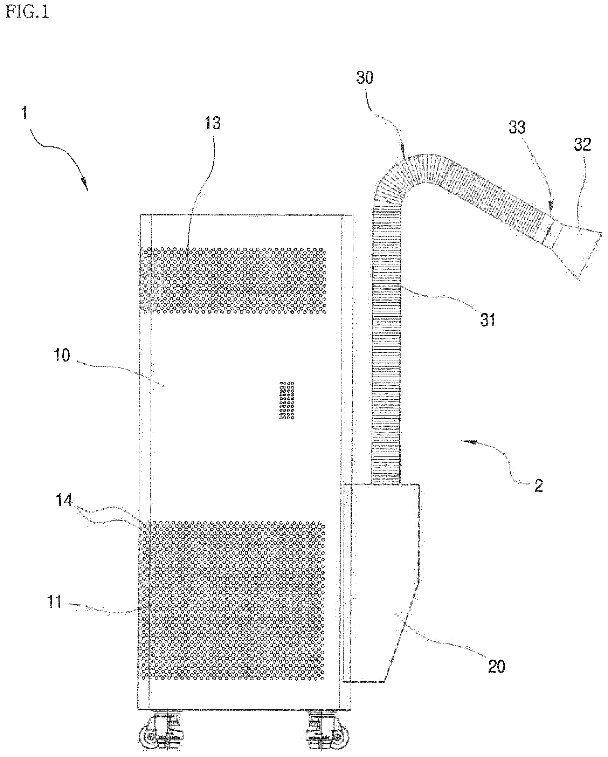

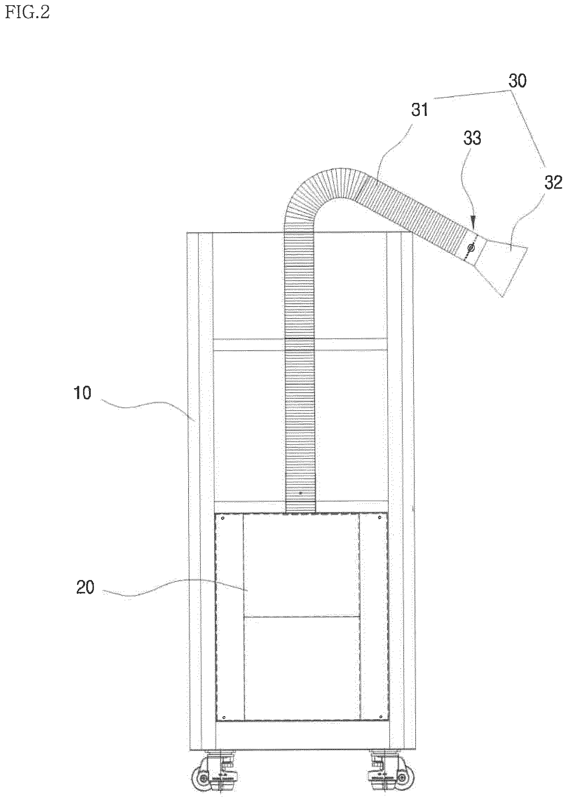

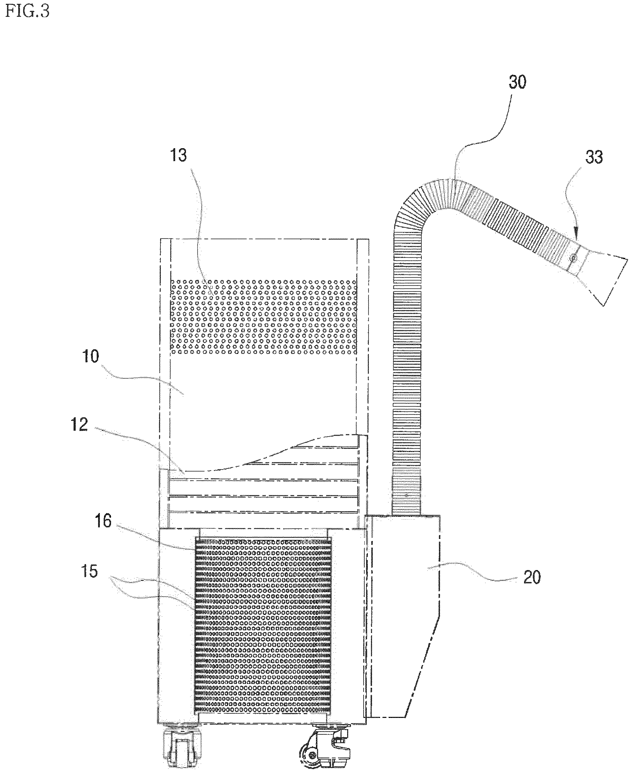

FIG. 1 is a front view of the harmful gas purification device according to the present invention; FIG. 2 is a side view of the harmful gas purification apparatus according to the present invention; and FIG. 3 is an exemplary cross-sectional view of a harmful gas purification device according to the present invention.

Referring to the drawings, the harmful gas purification apparatus according to the present invention is divided into a wide area processing unit 1 and a local area processing unit 2 for harmful gas. In this case, it should be noted that the wide-area section means a wide section around the purifier is disposed, and the local section means a section to a specific point for the user to exhaust harmful gases.

The wide-area processing unit 1 includes: a suction unit 11 installed at a lower end of the main body 10 and collecting harmful gases; a filtering unit 12 for filtering and purifying the harmful gas above the suction unit 11; and a purified air discharge unit 13 for discharging the air purified to the upper side of the filtering part 12 to the outside.

That is, the wide-area processing unit 1 corresponds to the basic configuration of the purification apparatus proposed in the pre-registered invention. It is natural that a plurality of through holes 14 are formed through the inner and outer surfaces at the point of the body 10 where the suction unit 11 and the purified air discharge unit 13 are formed.

In addition, a fan (not shown) is installed in the purified air discharge unit 13. Thereby, it is natural that the harmful gas is sucked through the suction unit 11, filtered through the filtering unit 12, and then discharged through the purified air discharge unit 13.

On the other hand, in the suction unit 11, in order to prevent the harmful gas (specifically, air containing harmful gas) introduced through the main body 10 and the local section processing unit 2 from forming turbulence, a cylindrical drum 15 having a plurality of through holes 16 passing therethrough is formed.

At this case, the turbulence is generated by collision of harmful gases sucked in from various directions. Therefore, the cylindrical drum 15 functions as a guiding means for stably inhaling the toxic gas flowing in from various directions inside the filter unit 12.

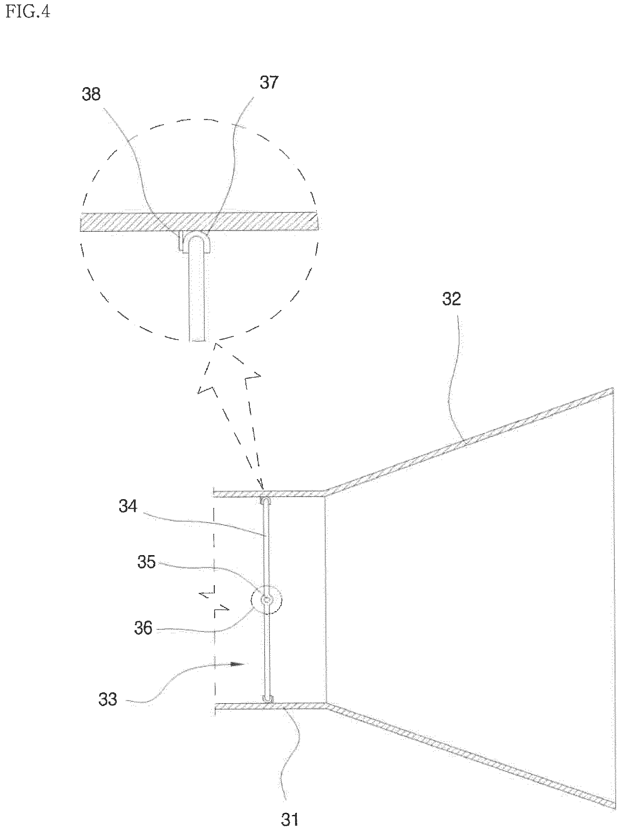

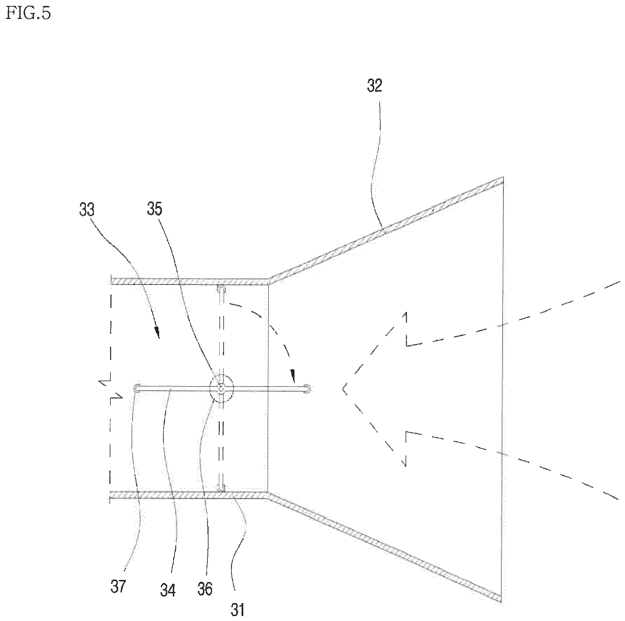

FIG. 4 is an enlarged cross-sectional view of the door assembly of the toxic gas purification device according to the present invention, and FIG. 5 is a use state diagram of the door assembly of the harmful gas purification device according to the present invention.

Referring to FIGS. 1 to 5, the local section processing unit 2 includes a housing 20 and a local exhaust line unit 30.

The housing 20 is coupled to the outer surface of the point of the body 10 on which the suction unit 11 is formed. Such a suction unit 11 communicates with the suction unit 11 inside the main body 10. This becomes a passage through which harmful gas sucked (exhausted from the side of a specific point) through the local exhaust line unit 30 in the local section proceeds to the intake part 11.

In particular, the local exhaust line unit 30 has one end coupled to one side of the housing 20, and the other end is a suction pipe 31 formed with a long length (the length set at the time of manufacture) so that the other end can be disposed at a specific point by the user. In this case, the suction pipe 31 is preferably formed in the shape of a corrugated pipe that deforms a shape of a specific angle and curvature, and can be maintained by magnetic force even after deformation.

In addition, a collection end 32 is formed at the end of the suction pipe 31 applied to the local exhaust line 30 so as to collect harmful gas at a specific point with high efficiency. To this end, the collecting end 32 is formed in a similar 'hopper' shape to collect harmful gases in a wide range of a specific point.

In the local exhaust line unit 30, a door assembly 33 is installed inside the end of the suction pipe 31 in which the collecting end part 32 is formed. The door assembly 33 generates a suction force to a specific point and blocks the suction force (sealing or opening the inner peripheral surface of the suction pipe) for local exhaust.

The door assembly 33 includes a door 34, a hinge pin 35, and a knob 36.

The door 34 is formed in a circular plate shape, considering that the suction pipe 31 is formed in a generally circular cross section, and it is natural that the door 34 is formed in a shape and width corresponding to the inner peripheral surface of the suction pipe 31. At this time, a sealing cover 37 made of synthetic resin or synthetic rubber is coupled to the outer peripheral surface of the door 34 to be configured. The sealing cover 37 improves the sealing efficiency with the inner circumferential surface of the suction pipe 31 when the inner circumferential surface of the suction pipe 31 is sealed.

In addition, the hinge pin 35 is coupled to pass through the central point of the suction pipe 31 and the door 34. This allows the door 34 to be rotated at a specific angle inside the suction pipe 31 to seal or open the inner peripheral surface of the suction pipe 31.

In particular, the knob 36 is formed at the end of the hinge pin 35 protruding outward of the suction pipe 31 so that the user can rotate the hinge pin 35. This may be integrally formed when manufacturing the hinge pin 35, or may be separately manufactured and combined with a synthetic resin material.

Meanwhile, the door assembly 33 protrudes inside the suction pipe 31. This further includes a limit protrusion 38 that limits the rotation of the door 34 in order to maintain the angle of the door 34 when the door 34 seals the inner peripheral surface of the suction pipe 31 (vertical angle in the drawing).

The harmful gas purification apparatus configured as described above is in a state in which the inner circumferential space of the suction pipe 31 of the local exhaust line unit 30 is blocked by the door 42 of the door assembly 40 in a normal state, and the wide area processing unit (perform harmful gas purification by 1) (selective harmful gas purification for a wide area).

In order to purify the harmful gas at a specific point during the harmful gas purification by the wide area processing unit 1 as described above, by opening the inner circumferential space of the suction pipe 31 with the door 42 of the door assembly 40 and by placing the collection end 32 of the local exhaust line 30 at a specific point to exhaust the harmful gas, it is possible to purify the harmful gas at the target local point(purification of harmful gases in a mixture of regional and regional areas).

### <Additional Embodiment 1>

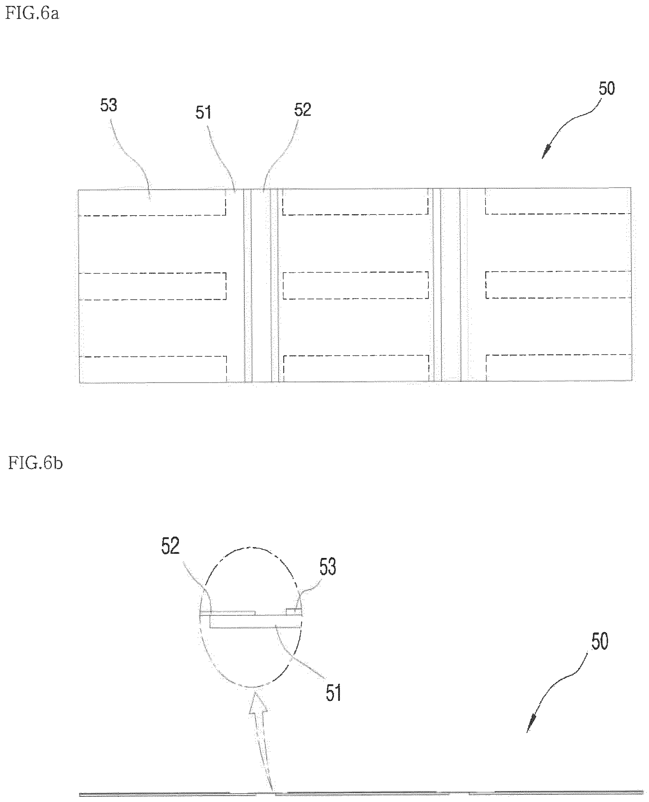

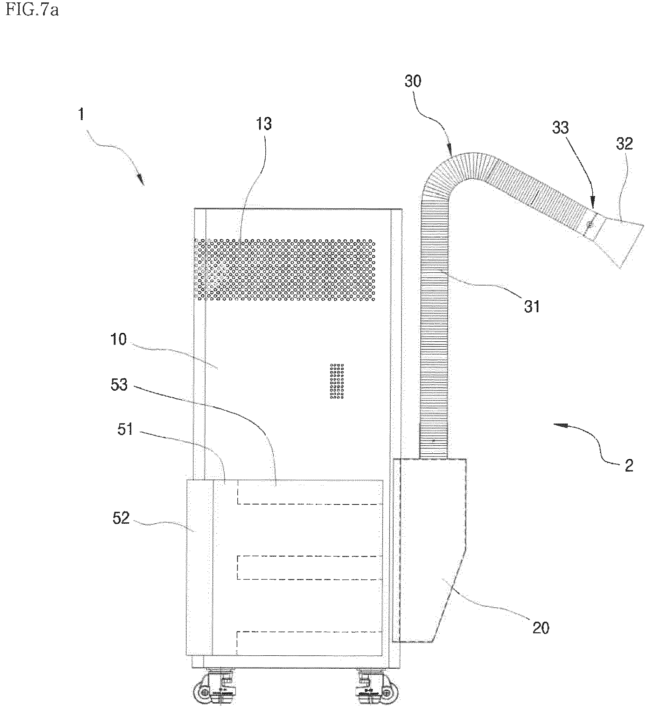

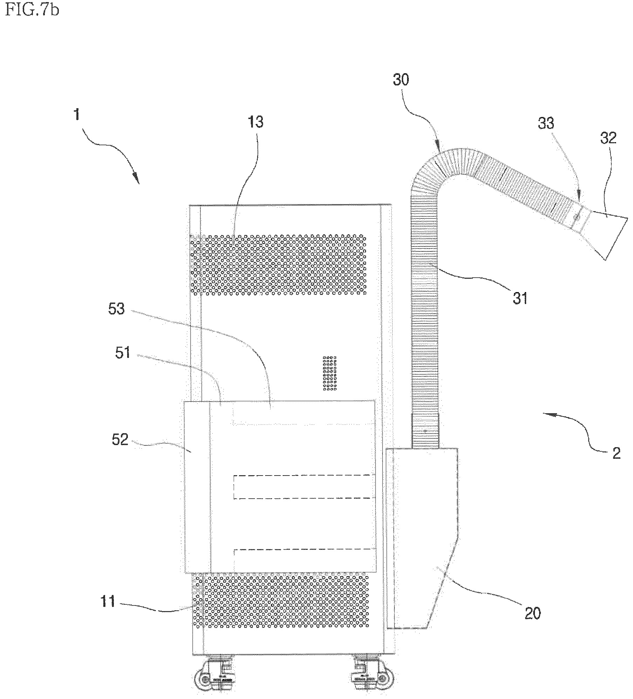

FIG. 6a and 6b are a front view and a plan view of a further embodiment 1 of the present invention, and FIG. 7a and 7b are examples of the use state of the additional embodiment 1 of the present invention.

Referring to the drawings, the harmful gas purifying apparatus according to the additional embodiment 1 is equipped with a cover assembly 50, which seals the suction unit 11 on the other side except the side on which the housing 20 of the local exhaust line unit 30 is installed, thereby sealing the local exhaust line unit 30, to improve the suction efficiency.

To this end, in the noxious gas purification device, the main body 10 is formed in a shape of a polygonal cylinder (in the embodiment, a square cylinder in a plane). In order to attach the magnetic body 53 of the cover assembly 50 to be described later, at least the section in which the suction unit 11 of the main body 10 is formed is formed of a metal material.

Specifically, the cover assembly 50 includes cover plates 51, connection members 52, and magnetic bodies 53.

The cover plate 51 is formed to be wider than the width of the suction unit 11 formed in the main body 10. Here, the cover plate 51 is provided in a number corresponding to the remaining side surfaces except for the side on which the housing 20 of the local exhaust line unit 30 coupled to one surface of the body 10 in the form of a polygonal cylinder is installed. In the drawing, considering that the suction unit 11 is formed on the same horizontal line on the main body 10, the cover plate 51 is placed maintaining a specific interval (an interval at which a connecting member to be described later is coupled) on a horizontal line.

The connecting member 52 connects each end portion of each cover plate 51 so that the cover plates 51 seals the suction unit 11 so that each cover plate 51 has a different angle on the plane. It is a configuration to make it possible. Here, the connecting member 52 is formed of a soft synthetic resin material, and a cover plate attached to one surface corresponding to the angle of the bending point of each surface of the main body 10 on which the suction unit 11 is formed and a round shape. The cover plate 51 adjacent to the 51 is configured to be bent.

Each of the connecting members 52 connects each end of each cover plate 51. Thereby, each cover plate 51 seals the suction unit 11 so that the angle on the plane is different. The cover plates 51 are integrated by the connecting members 52. Here, the connection member 52 is formed of a soft synthetic resin material. This enables the cover plate 51 attached to one side and the adjacent cover plate 51 to be bent corresponding to the angle of the bending point of each side of the body 10 on which the suction unit 11 is formed and the shape of the round shape .

The magnetic body 53 is configured by being coupled to each cover plate 51 in a number of more than one, and the magnetic body 53 is applied as a permanent magnet in the form of a band having a specific area. Such a magnetic body 53 allows the cover plate 51 to be attached to the surface of the body 10 by magnetic force when each cover plate 51 seals the multiple body 10 and the suction unit 11..

In particular, in order to improve the adhesion of the cover assembly 50 to the main body 10 by magnetic force, the figure illustrates a configuration in which three magnetic bodies 53 are arranged up and down. When the cover assembly 51 is not used, each cover plate 51 can be layered by the configuration of the magnetic body 53 and the connecting member 52 and attached to one side of the main body 10 to be stored.

As shown in FIG. 7A, the cover assembly 50 basically closes the entire suction unit 11 of the main body 10 to maximize the suction efficiency of the local exhaust line unit 30. On the other hand, as shown in FIG. 7B, when the cover assembly 50 is closed only a part of the suction unit 11, the local treatment of the toxic gas can be performed in parallel with the wide range treatment of the toxic gas by the suction unit 11. That is, the noxious gas purifying apparatus according to the additional embodiment 1 can simultaneously process a wide area and a local section of a harmful gas as shown in FIGS. 7A and 7B.

### <Additional Embodiment 2>

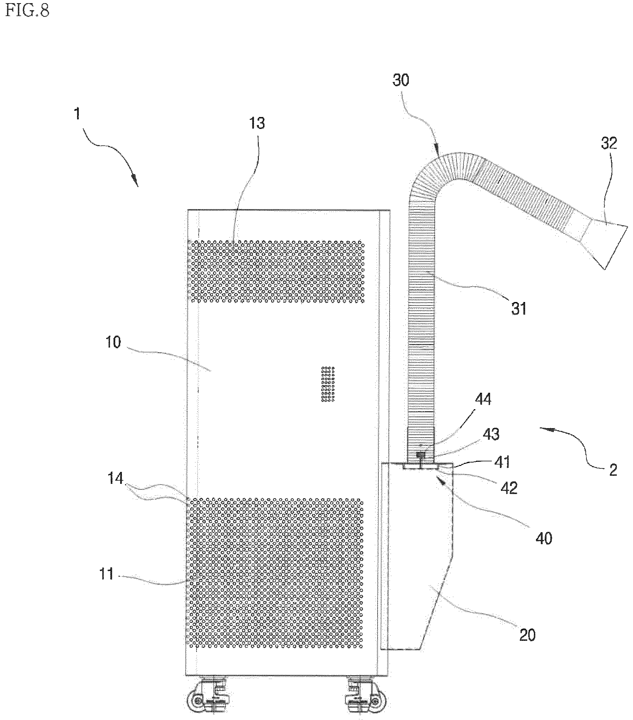

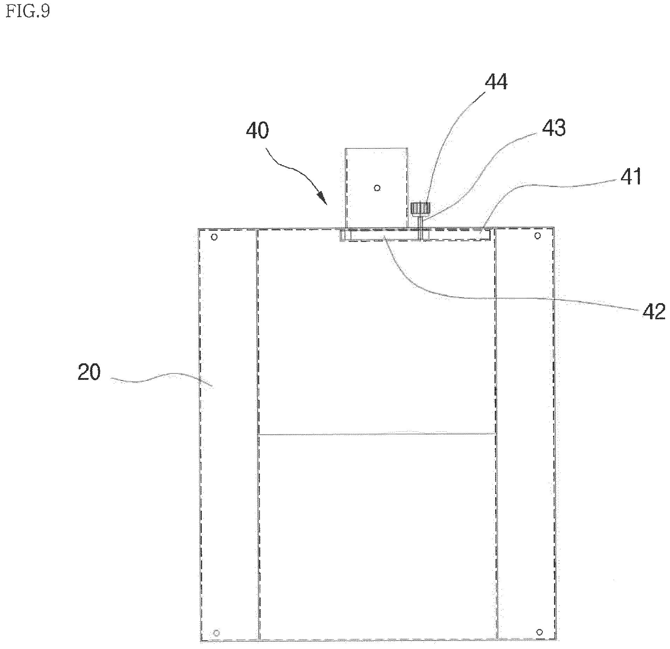

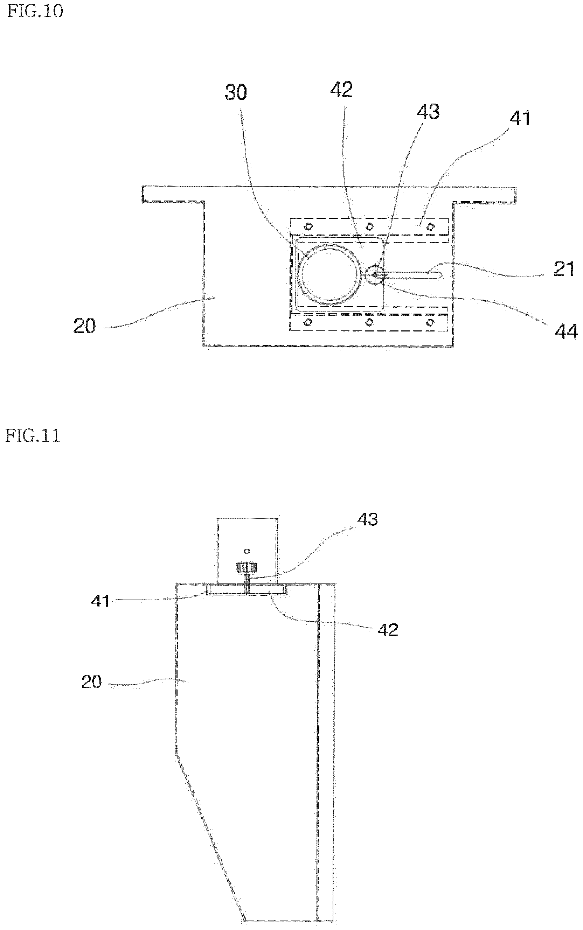

FIG. 8 is a front view of a further embodiment 2 of the present invention, FIG. 9 is a front view of the housing of the further embodiment 2 of the present invention, FIG. 10 is a plan view of the housing of the further embodiment 2 of the present invention, and FIGS. 11 is a side view of the housing of the further embodiment 2 of the present invention.

Referring to the drawings, the harmful gas purifying apparatus according to the additional embodiment 2 illustrates a configuration in which the door assembly 40 of the local exhaust line unit 2 is installed in the housing 20 instead of the suction pipe 31.

The door assembly 40 includes a rail 41, a door 42, and a lever 43.

The rails 41 are disposed on both sides of the combined ends of the local exhaust line 30 on the inner surface of the housing 20 to which the local exhaust line 30 is coupled. Specifically, the rail 41 is formed to have an approximately "L" cross section in order to support both ends of the door 42 to be described later.

The door 42 is slidably coupled to the rail 41 so as to block or open the open end of the local exhaust line 30. At this time, the door 42 is coupled with a somewhat rigid sealing member or the like on both sides of the rail 41. Accordingly, it is possible to have better sealing efficiency than when the open portion of the local exhaust line unit 30 is blocked.

One end of the lever 43 is coupled to one side of the door 42, and the other end protrudes through the slit 21 formed in the housing 20 over a section in which the door 42 slides. This allows the user to block or open the open part of the local exhaust line unit 30. Here, a knob 44 is coupled to an end portion protruding outside the housing 20 of the lever 43 so that the user can easily grasp it.

### <Additional Embodiment 3>

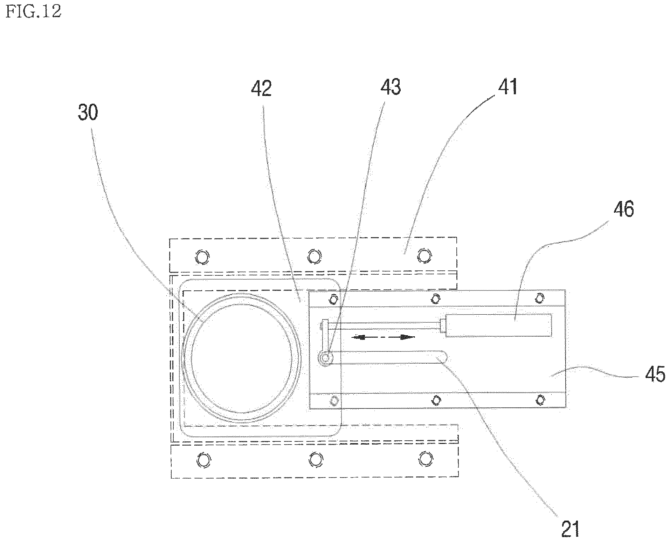

FIGS. 12 is a plan view of a door assembly of a further embodiment 3 of the present invention.

Referring to the drawings, in the harmful gas purification apparatus of Additional Embodiment 3, the door slide movement of the door assembly 40 illustrated in Additional Embodiment 2 may be done by an external signal input, such as an electrical signal input or a hydraulic/pneumatic signal input. To this end, the door assembly 40 is configured by further adding a cover 45 and a door driving source 46.

The cover 45 is coupled to conceal the slit 21 and the lever 43 on the outer surface of the housing 20 on which the slit 21 is formed. At this time, the cover 45 prevents leakage of harmful gas through the slit 21 of the housing 20 formed as a space for the lever 43 to move, and provides a space for installing the door driving source 46 to be described later.

The door drive source 46 is installed inside the cover 45 and is coupled with the lever 43 to slide the lever 43 so that the door 42 closes the open part of the local exhaust line unit 30. Can be blocked or opened. To this end, the door drive source 46 may include a solenoid that slides the door 42 by an external electric signal or a small cylinder that slides the door 42 by supplying external oil/pneumatic pressure.

Although the preferred embodiments of the present invention have been disclosed for illustrative purposes, the present invention is not limited to the construction and operation of the embodiments. In addition, those skilled in the art can understand that various changes and modifications can be made therein without departing from the subject matters of the disclosure. Thus, such changes and modifications fall within the spirit and scope of the disclosure.

### Reference Numerals

- 1:: wide area processing unit
- 2:: local area processing unit
- 10:: main body
- 11:: suction unit
- 12:: filtering unit
- 13:: purified air discharge unit
- 20:: housing
- 21:: slit
- 30:: local line exhaust unit
- 31:: suction pipe
- 32:: collection end
- 33:: door assembly
- 34:: door
- 35:: hinge pin
- 36:: knob
- 37:: sealing cover
- 50:: cover assembly
- 51:: cover plate
- 52:: connecting member
- 53:: magnetic body

## Claims

1. An apparatus for purifying harmful gases comprising a suction unit 11 for collecting harmful gas is installed at the lower end of the main body 10, and a filtering unit 12 for filtering and purifying the harmful gas is installed above the suction unit 11, and a purified air discharge unit 13 for discharging the purified air to the outside is installed above the filtering part 12, wherein the wherein the apparatus for purifying harmful gases includes:
a housing 20 coupled to an outer surface of a point of the main body 10 on which the suction unit 11 is formed, and communicating with the suction unit 11 inside the main body 10;
a local exhaust line unit 30 comprising a suction pipe 31 that is coupled to one side of the housing 20 and is formed long enough so that the user can exhaust the harmful gas at a specific point, and a collection end 32 to allow the user to collect harmful gases at a specific point at the end of it.

2. The apparatus according to claim 1, wherein the local exhaust line unit 30 comprises:
a door assembly 33, installed inside the end of the suction pipe 31 on which the collecting end 32 is formed, and blocks or generates suction power to a specific point for local exhaust.

3. The apparatus according to claim 2, wherein the door assembly 33 comprises:
a door 34 formed in a shape and width corresponding to the inner circumferential surface of the suction pipe 31 and disposed inside the suction pipe 31;
a hinge pin 35 coupled through the suction pipe 31 and the door 34 so that the door 34 may be rotated inside the suction pipe 31 to seal or open the inner circumferential surface of the suction pipe 31; and
a knob 36 coupled to or integrally formed with an end of the hinge pin 35 protruding outward of the suction pipe 31 so that the user can rotate the hinge pin 35.

4. The apparatus according to claim 2, wherein the door 34 comprises:
a sealing cover 37 made of synthetic resin or synthetic rubber coupled to the outer peripheral surface of the door 34 in order to improve sealing efficiency with the inner peripheral surface of the suction pipe 31, when the inner peripheral surface of the suction pipe 31 is sealed.

5. The apparatus according to any one of claims 1 to 4, wherein the main body 10 comprises:
a cover assembly 50, which is formed in a polygonal cylindrical shape, and which seals the suction unit 11 on the side except the other side on which the housing 20 of the local exhaust line unit 30 connected to one surface of the main body 10 formed in a polygonal cylindrical shape, to improve the suction efficiency of the local exhaust line unit 30.
wherein the cover assembly 50 comprises:
a plurality of cover plates formed to be wider than the width of the suction unit 11 formed in the main body 10, and provided in a number corresponding to the remaining side surfaces of the main body 10 except for the side on which the housing 10 of the local exhaust line unit 30 coupled to the one side of polygonal cylindrical main body 10 is installed;
a plurality of connecting members 52 for integrating cover plates 51, connecting each end portion of each of the cover plates to seal the suction unit 11 so that each cover plate has a different angle on a plane; and
magnetic bodies 53 that are coupled to each of the cover plates 51 in a number of more than one so that the cover plates 51 are attached to the surface of the main body 10 by magnetic forces when each cover plate seals the suction unit 11 of the polygonal main body 10.
